# EUROPEAN PATENT SPECIFICATION

(11) **EP 0 847 891 B1**
(45) Date of publication and mention of the grant of the patent: **21.11.2001**
(21) Application number: 97830311.3
(22) Date of filing: 27.06.1997
(51) Int. Cl.: B60L 5/19

(54) **Pantograph supporting system for a railway vehicle with variable trim carbody**
Wippeaufhängungsvorrichtung für Schienenfahrzeug mit Wagenkasten mit variabler Neigung
Système de support pour pantographe pour véhicule ferroviaire à caisse à inclinaison variable

(30) Priority: 13.12.1996 IT TO961020
(43) Date of publication of application: 17.06.1998
(73) Proprietor: ALSTOM FERROVIARIA S.P.A., 12038 Savigliano (IT)
(72) Inventor: Grattapaglia, Giorgio, 10137 Torino (IT)
(74) Representative: Buzzi, Franco

(56) References cited:
- EP-A- 0 436 993
- DE-A- 2 243 405
- PATENT ABSTRACTS OF JAPAN vol. 1996, no. 12, 26 December 1996 (1996-12-26) -& JP 08 205310 A (SUMITOMO PRECISION PROD CO LTD), 9 August 1996 (1996-08-09)

## Description

The present invention is related to railway vehicles having a variable trim carbody, comprising a pair of bogies having respective transverse swinging beams and hanger members pivotally connecting each swinging beam and the carbody so as to enable tilting of the carbody substantially around a longitudinal axis thereof, tending to oppose the non-compensated centrifugal acceleration acting on the carbody when the vehicle is running along a track curve.

Railway vehicles of the above-referenced type are presently employed by the national railway companies of several countries for high speed railway lines. Tilting of the carbody along a curve appreciably enhance comfort for the passengers, due to the fact that the transverse acceleration felt within the carbody as the vehicle is travelling over a curved track is relatively limited.

A driving system is provided for operating the carbody tilting along curved tracks, including actuators interposed between the transverse swinging beam of each bogie and the carbody, and an electronic adjustment unit operatively connected to transducer means provided for detecting the non-compensated centrifugal acceleration acting on the car body and the running condition of the vehicle along a curve. Such a system is disclosed, for instance, in European patent application EP-A-0763438 in the name of the same Applicant.

The railway vehicles of the type set forth in the above, which as a rule are equipped with electrical traction motors, are further provided with a pantograph placed above the carbody so as to cooperate under sliding contact with an aerial electrical supply line, and with a pantograph support which is movable relatively to the carbody so as to keep the pantograph into contact with the aerial supply line while the carbody is tilted along a curve.

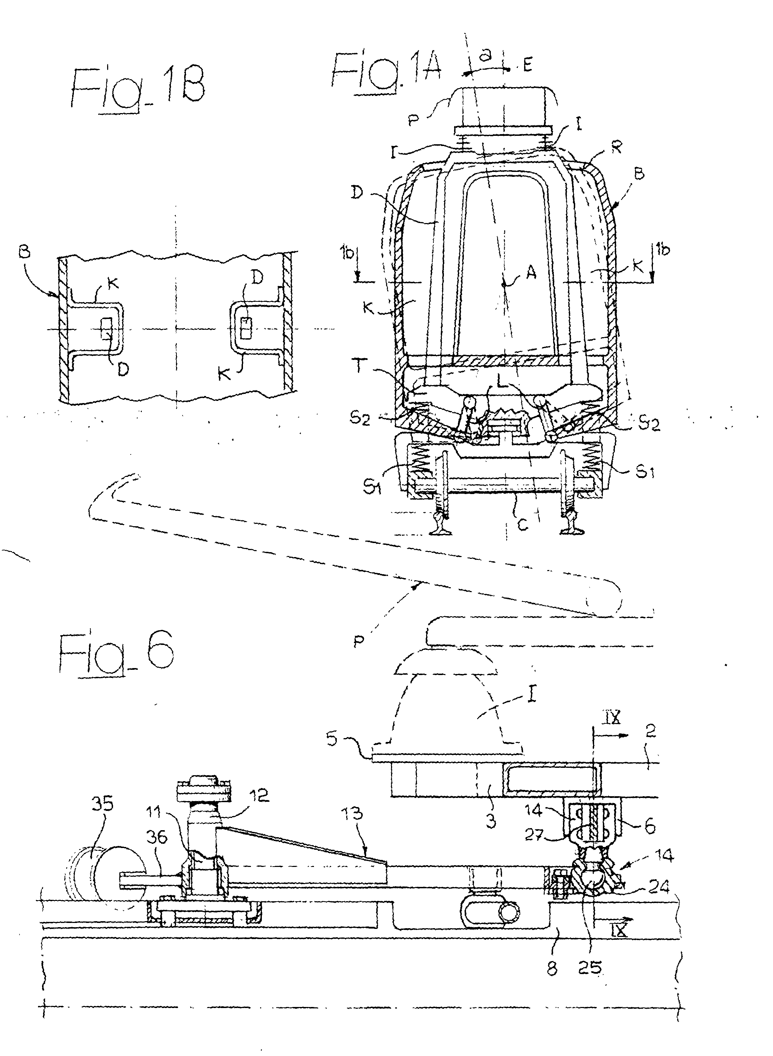

Figures 1A and 1B of the annexed drawings diagrammatically show the arrangement of such a railway vehicle, substantially corresponding to that of the electric train named ETR 450 of the national Italian Railways. As shown in these figures, the carbody B of the railway vehicle is supported in proximity of its opposite ends by two bogies C (only one of which is depicted in figure 1A), each of which is provided with a transverse swinging beam T suspended onto the bogie C by means of secondary suspension springs S2. The primary suspension springs of the bogie C are designated as S1. The floor of the carbody B is connected (in correspondence of a load bearing transverse beam which is not shown) to the transverse swinging beam T through pairs of connecting rods or swing hangers L, whose articulation axes are parallel to the longitudinal axis of the carbody B, indicated as A.

The pantograph P projects above the roof R of the carbody B and the related support, generally designated as D, is constituted by an arch structure which is rigidly connected lowerly to the transverse swinging beam T and whose lateral struts are extending inside the carbody, along respective lateral housings K. Electrical insulators I are interposed between the top of the arch structure D and the pantograph P, and an elastic system (not shown) acts in a conventional way so as to keep the pantograph P into sliding contact against the aerial electrical supply line E.

When the vehicle is running along a curve the carbody B is tilted, by the related operating system, for instance of an angle a towards the center of the curve, i.e. to the left with respect to the diagram of figure 1, thus rotating relative to the arch structure D which, apart from the roll motions of the transverse swinging beam T due to yelding of the suspension springs S1 and S2, ideally stands stationary.

This arrangement involves a drawback related to a remarkable reduction of available room inside the carbody B, both in the transverse and in the longitudinal directions, due to the need of providing on both sides thereof the cumbersome housings K containing the two struts of the arch structure D. Moreover the housings K, which are necessarily open at their bottom (i.e. in correspondence of the floor of the carbody B above the bogies C) and at their top (i.e. in correspondence of the roof R), involve when the vehicle is running both a troublesomely noise inside the carbody B and the risk of foreign material intrusions, as well as a worsening of the aerodynamic performance of the carbody itself owing to the presence of longitudinal retaining means of the arch structure D above the roof R of the carbody B.

To the aim of avoiding these inconveniences it has been proposed to provide connecting means of the pantograph support upon the carbody roof and control means to displace the pantograph support in a transverse direction relative to the longitudinal axis of the carbody, through said connecting means, on opposite sides with respect to a central position corresponding to a non-tilted condition of the carbody. Such an arrangement is disclosed in Japanese Railway Engineering No. 122, February 1993, pages 14-15. This solution makes use of arching bearing guides fixed to the carbody roof and along which the pantograph support is movable, and the support is restrained from both sides of the carbody by wire ropes which extend to the roof along the carbody side panels and are lowerly secured to the side-sills of a bogie, through a tensioning unit. Accordingly, when the carbody is tilted along a curve, the pantograph is kept substantially centered with respect to the electrical supply line.

However this arrangement, though being equipped with additional safety measures such as for instance the provision of two wire ropes on each side of the carbody and of a system in which the detection of a broken rope triggers automatic dropping of the pantograph, does not afford full reliability since it is based upon resistance of the wire ropes, which are continuously subjected to fretting and thus to wear, with a consequent weakening during operation. Moreover the wire rope tensioning system is relatively complex and also subjected to failure risks. Lastly the use of this known system, which is expressly provided for tilting systems according to which the carbody is rotated around a fixed axis (as the carbody is bearing upon rollers or arched guide rails and associated recirculating ball bearings) is unsuitable in the case of a tilting system providing swing hanger members pivotally connecting the carbody to the transverse beams. Actually, since in that case the center of instantaneous rotation of the carbody is not fixed, but is shifted vertically and transversally as a function of the tilting angle, the tension degree of the wire ropes on one side and on the other side of the carbody would be uneven.

Other proposed solutions for keeping the pantograph centred are disclosed in, for example, DE 22 43 405 A, EP 0 436 993 A and JP 08 205310A.

The object of the present invention is to overcome the above drawbacks, and more particularly to provide a pantograph supporting system for a railway vehicle with variable trim carbody of the type set forth at the beginning, enabling the pantograph, carried upon the carbody roof, to be displaced so as to substantially reproduce in a reversed way the movement of the carbody itself upon curve tilting thereof, while at the same time drastically reducing encumbrance inside the carbody by virtue of the suppression of the traditional lateral inner housings.

In order to achieve the above object, the invention is directed to a railway vehicle having a variable trim carbody such as defined in the pre-characterising portion of claim 1, the main feature of which resides in that said connecting means between the support of the pantograph and the carbody include:
- a first, a second and a third pivot pin arranged on the roof of the carbody as the apexes of a triangle and of which the first pivot pin is positioned vertically substantially in correspondence of the center line of the carbody and the second and third pivot pins are positioned symmetrically on opposite sides of the center line of the carbody and are inclined with respect to the vertical so as to be mutually converging downwardly,
- a first, a second and a third swinging arm connected at one end thereof to said first, second and third pivot pin, respectively,
- a first, a second and a third ball joint connecting the ends of said swinging arms opposite to said pivot pins with said support of the pantograph,
and in that said operating means comprise a transmission between said transverse swinging beam and said first swinging arm.

Preferably the first, second and third ball joints are substantially arranged in a horizontal plane in the said central condition of the support of the pantograph, and the first, second and third swinging arms have same length.

Accordingly, upon curve tilting of the carbody the support of the pantograph is banked, rotating around axes which are parallel to the longitudinal carbody axis while the carbody is shifted transversally relative to the central position corresponding to the non-tilted condition of the carbody. Correspondingly, by making the rotation angle of the pantograph support almost equal and opposite to that of the carbody, the pantograph support will be kept substantially parallel to the rail plane, but for any roll motions due to yelding of the secondary suspension.

By the solution according to the invention a kinematic connection between the pantograph and the roof of the vehicle carbody is provided which is at the same time more functional and safe and also better protected, as compared to the known solutions employing connections between the pantograph support and the carbody made by bearing guides with rolling pads and operating the pantograph displacement through flexible wire ropes, while appreciably reducing encumbrance of. the system inside the carbody. To this effect the operating transmission between the transverse swinging beam of the vehicle bogie and the first swinging arm of the connecting means of the pantograph support may comprise either a vertical rotatable shaft or a vertical linearly displaceable push-pull rod arranged along one side of the carbody, whose inner space shall be in practice very little penalized. The suppression of the traditional inner lateral housings enables, further to increasing habitableness within the carbody, to appreciably reduce the noise therein when the vehicle is running, and also to prevent any risks that foreign material may penetrate thereinto from the outside. Additionally the aerodynamic performance of the carbody is possibly improved, also by virtue of suppression of any longitudinal restraining members of the pantograph support, raising on the carbody roof.

Further features of the invention will become apparent through the following detailed description, with reference to the accompanying drawings purely provided by way of non limiting example, in which:
figure **1A** is a diagrammatic view showing a simplified vertical section of a railway vehicle having a variable trim carbody according to the prior art, such as previously disclosed,
figure **1B** is a partial horizontally sectioned view along line 1b-1b of figure 1A,
figure **2** is a diagrammatic perspective view showing the connecting system between the pantograph support and the carbody of a railway vehicle according to the invention,
figure **3** is a diagrammatic view similar to figure 1A, though in an enlarged scale, in which, so as to explain the geometrical principle of the invention, it is supposed that, while running along a curve, the vehicle bogie be rotated relative to the carbody, instead than the carbody being rotated relative to the bogie,
figure **4** is a partially vertically sectioned view in an enlarged scale along line IV-IV of figure 2,
figure **5** is a top plan, partial and enlarged view of figure 2,
figure **6** is a lateral elevational, enlarged and partially sectioned view according to arrow VI of figure 5,
figure **7** is a perspective and fragmentary view showing a first embodiment of the operating system of the pantograph support according to the invention,
figure **8** is a view similar to figure 7 showing a second embodiment of the operating system of the pantograph support according to the invention,
figure **9** is a cross sectioned view along line IX-IX of figure 6,
figure **10** is a horizontal section along line X-X of figure 9,
figure **11** shows in an enlarged scale a detail of figure 4, and
figure **12** shows an alternative embodiment of the pantograph support according to the invention.

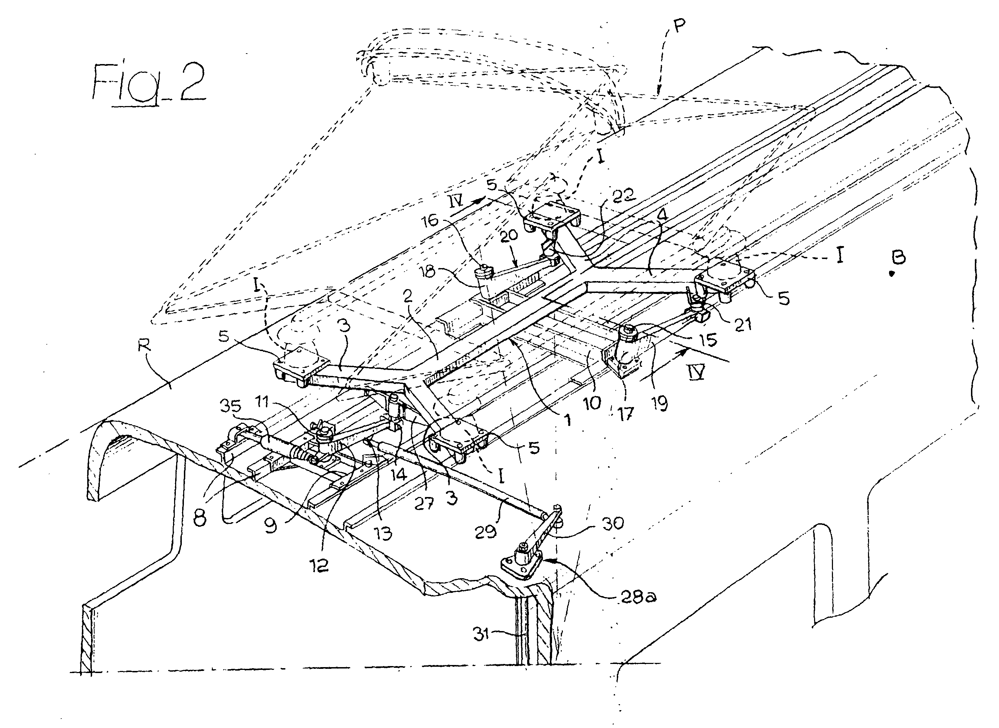

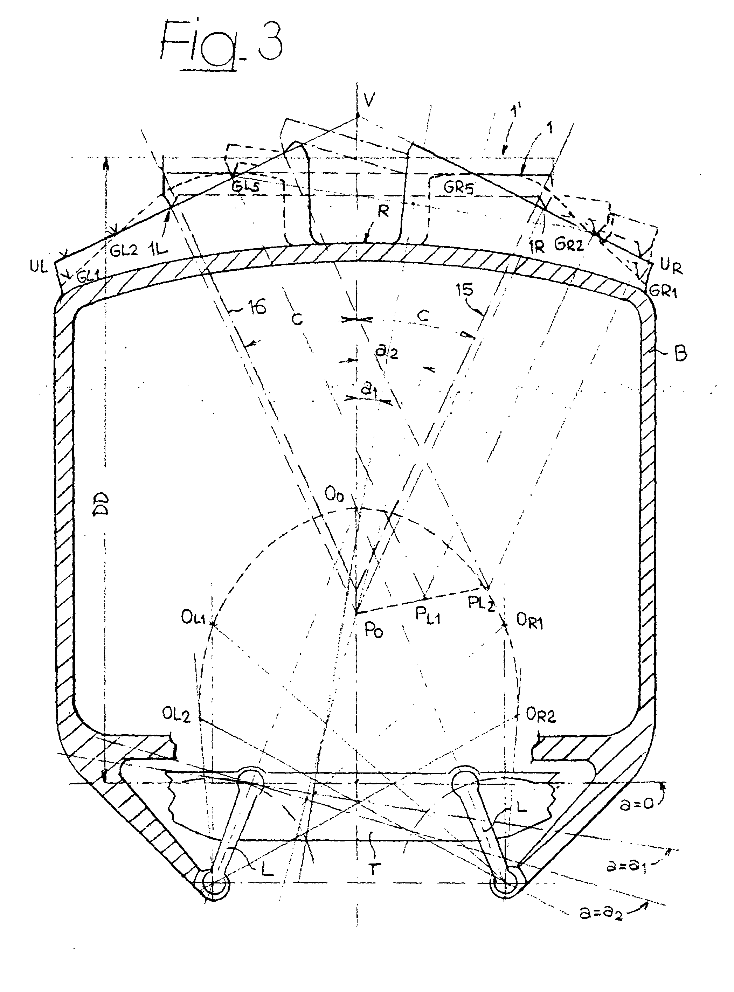

Referring initially to figures 2 and 3, reference numeral 1 generally designates a support applied, in the way which shall be clarified in detail in the following, onto the roof R of the carbody B of a railway vehicle, to bear a pantograph P.

As in the case of the prior art disclosed in the above with reference to figures 1, in the vehicle according to the invention the carbody B is supported in proximity of its opposite ends by two bogies not shown in the drawings, each of which comprises in a conventional fashion a frame and a transverse swinging beam T. The beam T is located substantially in correspondence of the transverse center line of the bogie, with the interposition of helical springs (not shown) which constitute the vertical and lateral secondary suspension of the vehicle.

The carbody B is lowerly connected, also in a way known per se, to the transverse swinging beam T through pairs of swing hangers L whose articulation axes are directed parallely to the longitudinal axis of the vehicle. It is to be pointed out that the drawing of figure 3 must only be considered as a mere functional diagram, without any direct correspondence with the actual structural construction of the elements shown therein.

When the vehicle is running along a curve, the carbody B is thus able to rotate so as to tilt inwardly of the curve and thus counteract the centrifugal acceleration acting on the carbody B, which is not compensated by the cant of the outer rail of the track. Tilting is operated by a control system, for instance of the type known from EP-A-0736438 already mentioned in the above, which for the sake of simplicity of illustration is omitted in the drawings. This tilting system comprises, in brief, fluid actuators interposed between the body B and the transverse swinging beam T, and an electronic control unit to operate the actuators.

Due to the connection performed through the swing hangers L, tilting of the body B occurs around a movable instantaneous rotation center. Figure 3 shows diagrammatically, and in an intentionally exaggerated way, the locuses of the instantaneous rotation center, starting from a neutral position indicated as Oₒ, respectively towards the right and towards the left. The instantaneous rotation center shifts from Oₒ to O_{R1} and to O_{R2} when the top of the carbody B tilts to the right, and from Oₒ to O_{L1} and to O_{L2} when the top of the carbody B tilts to the left. The maximum tilt degree of the carbody B is normally about: a₂=8°. It is to be pointed out that these positions are shown in a purely indicative way.

In figure 3 the dotted lines trace the profiles GL₁...GL₅ and GR₁...GR₅ of two hypothetical curved guides, fixed to the roof R of the carbody B, which would keep a hypothetical support 1' of the pantograph P (bearing thereupon at its ends 1'L, 1'R) in a fixed position relative to the transverse swinging beam T, if this support 1' were to be transversally displaced so that its center line always remains above the center line of the transverse swinging beam T itself. With such curved guides GL₁...GL₅ and GR₁...GR₅ and with a mechanism suitably associated thereto, the support 1' would theoretically remain stationary, at a distance DD with respect to the transverse swinging beam T, exactly as in the case of the traditional vehicle having arched structures D according to figures 1A, 1B.

In the present invention the curved guides GL₁...GL₅ and GR₁...GR₅ are in practice replaced by two straight inclined guides V-U_{L} and V-U_{R} also shown, with continuos line, in figure 3. The segment V-U_{L} is parallel to the line passing through GL_{1_}GL₅ and is placed in the middle of the rise of the curved line GL_{1∪}GL₅. Likewise, the segment V-U_{R} is parallel to the chord GR₁_GR₅ and is placed in the middle of the rise GR_{1∪}GR₅. In figure 3 reference numeral 1 designates the support of the pantograph P which is bearing, at its points 1L and 1R, on the segments V-U_{L} and V-U_{R}.

Figure 3 shows that the support 1, while moving along the inclined straight guides V-U_{L} and V-U_{R} so that its center line remains above the center line of the transverse swinging beam T, takes practically same inclinations as those of the support 1', while on the contrary the distance DD changes considerably, and is longer for a maximum tilting angle of the carbody B (a=a2) and shorter when the tilting angle of the carbody B is null (a=0).

In figure 3 it is also apparent that, while the transverse beam T fictitiously swings relative to the carbody B fictitiously stationary, whereby its rotation center shifts from 0ₒ to 0_{L1} and to 0_{L2}, the support 1 rotates, to the opposite side, with respect to the carbody B so that its rotation center is shifted from Pₒ to P_{L1} and to P_{L2}, in a direction opposite to that of the swinging beam T, and this moving away causes the variation of the distance DD.

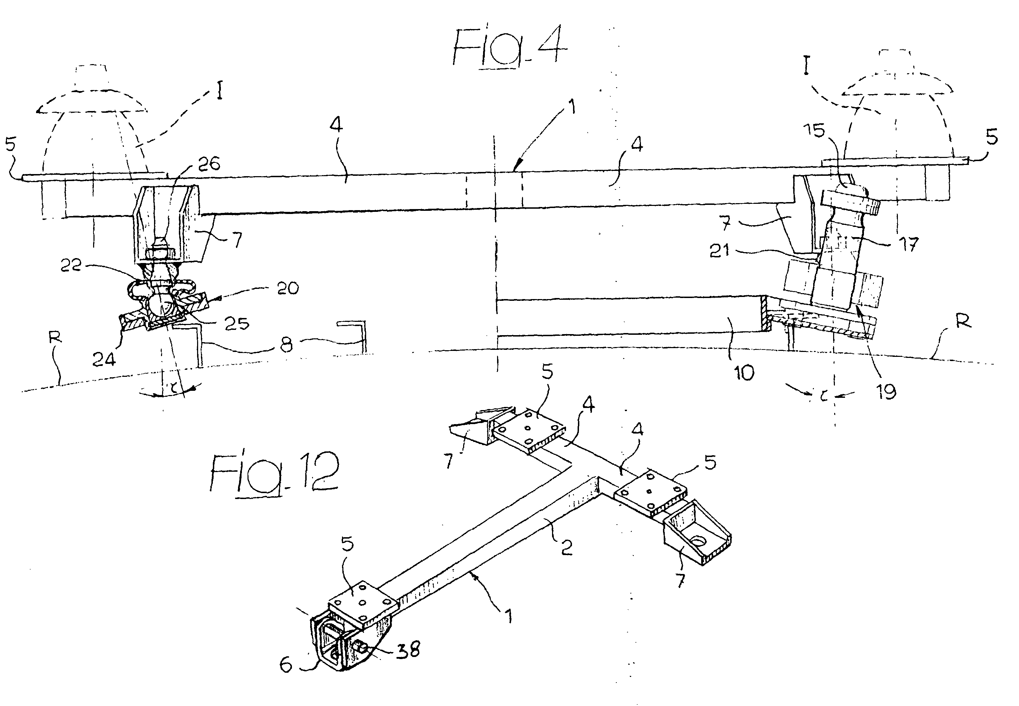

The variation of the distance DD together with the variation of the tilting angle A, which is a consequence of employing the straight guides V-U_{L} and V-U_{R} of figure 3, instead of the curves GL₁...GL₅ and GR₁...GR₅, is obviously acceptable for the support 1, since the pantograph P carried thereby is well adapted to much more relevant variations of its positioning in the vertical direction, in comparison to which the differences between the distances DD are absolutely negligible. Since the pantograph P, besides being free from respecting its positions in the vertical direction, is such to an even greater extent as far as its positions in the longitudinal direction are concerned, it derives that it is sufficient that guides such as those of figure 3 (V-U_{L} and V-U_{R}) be straight in the transverse vertical plane (the plane of figure 3). This condition is complied with by the structure disclosed in detail in the following, and in particular by arms shown as 19 and 20 in figure 2, connected to pivot pins shown as 15 and 16, inclined at an angle c (figure 4) and carrying at their ends opposite to the pivot pins 15, 16 respective housings for ball heads shown as 25 (figures 4 and 11). The ball heads 25, which are arranged at the opposite sides of the support 1, are corresponding to the points 1L and 1R of figure 3.

Owing to the straight profile of the ideal guides, which are evidently inclined of the angle c with respect to the horizontal, when the support 1 is displaced from the central position by a certain amount, the more it lowers on one side the more it raises on the opposite side. Therefore, its center line always remains at the same level.

Accordingly a guide which is rectilinear in the transverse vertical plane, formed by a third arm 13 swinging on a vertical pin 11 and carrying a ball head 14 (figures 2, 5 and 6) freely movable in the longitudinal direction relative to the support 1, ensures pitching stability of this support 1 and enables same to swing relatively to the carbody B around axes which are parallel to the longitudinal axis A of the carbody itself.

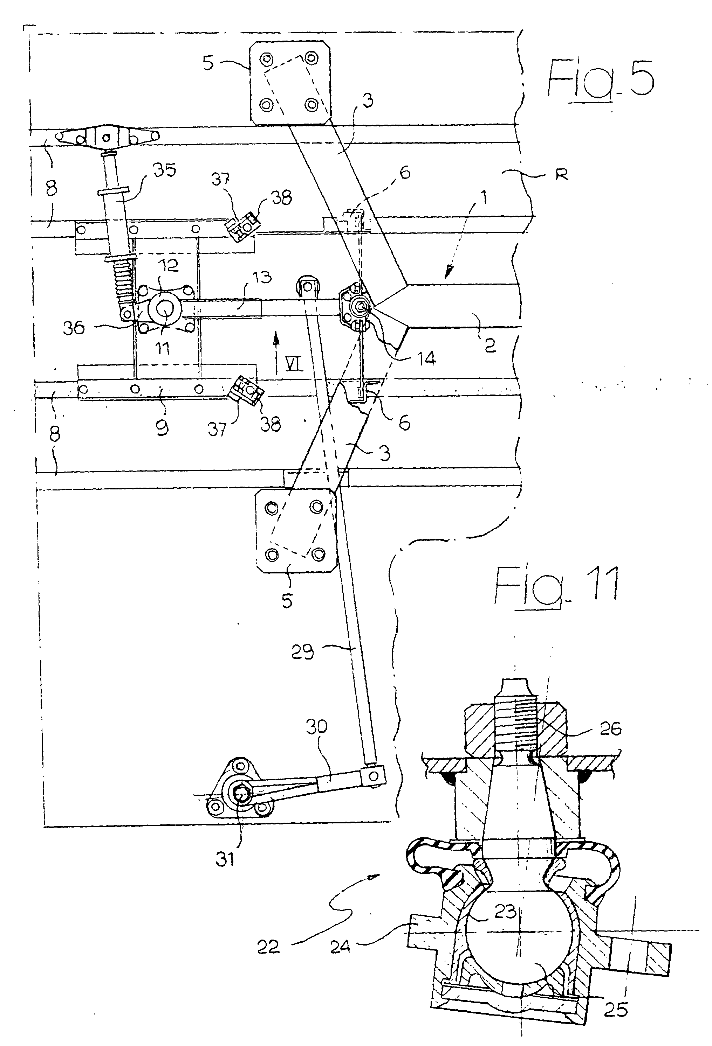

Referring now in more detail to figures 2 and 4-6, the support 1 has a generally H-like configuration with a longitudinal element 2 and angled end elements 3, 4 carrying respective connecting plates 5 for the insulators I of the pantograph P. In correspondence of the joining area between the end element 3 on one side, and in correspondence of the free ends of the end element 4 on the other, the support 1 is provided with fixing brackets indicated as 6 (figures 5, 6, 9, 10) and 7 (figure 4), respectively.

In alternative, and as shown in figure 12, the support 1 may have a substantially T-like design for pantographs P provided with three insulators I, without the end elements 3 and with the end elements 4 aligned with each other. In this case, on the side opposite to the fixing plates 5 carried by the end elements 4, a single fixing plate 5 is provided, which is carried by the end of the longitudinal element 2 opposite to those end elements 4. The necessary mobility in the longitudinal direction of a central ball joint 14, to be further disclosed in the following, is accordingly achieved by pivoting the bracket 6 onto the support 1 by means of a pivot pin 38.

Reverting to figure 2, the roof R of the carbody B is centrally provided (in a way generally known per se) with longitudinal angular elements 8 to which a first and a second mounting member 9, 10 are rigidly secured.

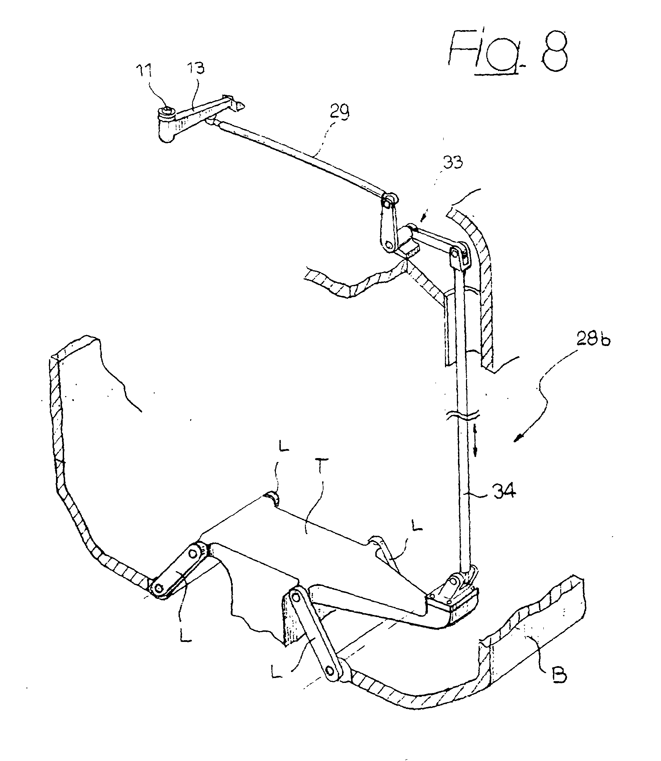

As shown in better detail in figures 5 and 6, the first mounting member 9 carries a first pivot pin 11, oriented vertically and placed in correspondence of the center line of the carbody B, on which one end 12 of a first swinging arm 13 is pivoted, whose opposite end carries the above referenced first ball joint generally designated as 14. The first ball joint 14 is connected, such as clarified in the following, with the fixing brackets 6.

Referring now in better detail to figure 4, the mounting member 10 carries a second and a third pivot pin 15, 16 which are symmetrically arranged on opposite sides of the center line of the carbody B and are inclined with respect to the vertical so as to be mutually converging downwardly.

The pivot pins 11, 15 and 16 are thus substantially arranged as the apexes of an isosceles triangle.

The ends 17, 18 of a second and a third swinging arm 19, 20, respectively, are pivoted onto the pivot pins 15, 16, and their opposite ends carry a second and a third ball joint 21, 22, respectively. The ball joints 21, 22 are in turn connected to the fixing brackets 7 of the two end elements 4, such as depicted in figure 4.

Figure 11 shows the construction of the third ball joint 22, which is generally identical to the second and first ball joints 21, 14. The ball joint 22, for instance of the type usually employed in the automotive field, comprises a seat 23 formed in an hollow body 24 rigidly connected to the swinging arm 20, and within which a ball head 25 is sealingly housed, which is carried by a threaded spigot 26 in turn secured to the fixing bracket 7.

The above disclosed arrangement is such that in the central position of the support 1 of the pantograph P shown in figures 2 through 6, wherein the first, the second and the third swinging arms 13, 19, 20 are oriented parallely to the longitudinal axis of the carbody B, the first, the second and third ball joints 14, 21, 22 (i.e. the respective centres of rotation) are substantially arranged within a horizontal plane. The first, second and third swinging arm 13, 19, 20 may have the same length.

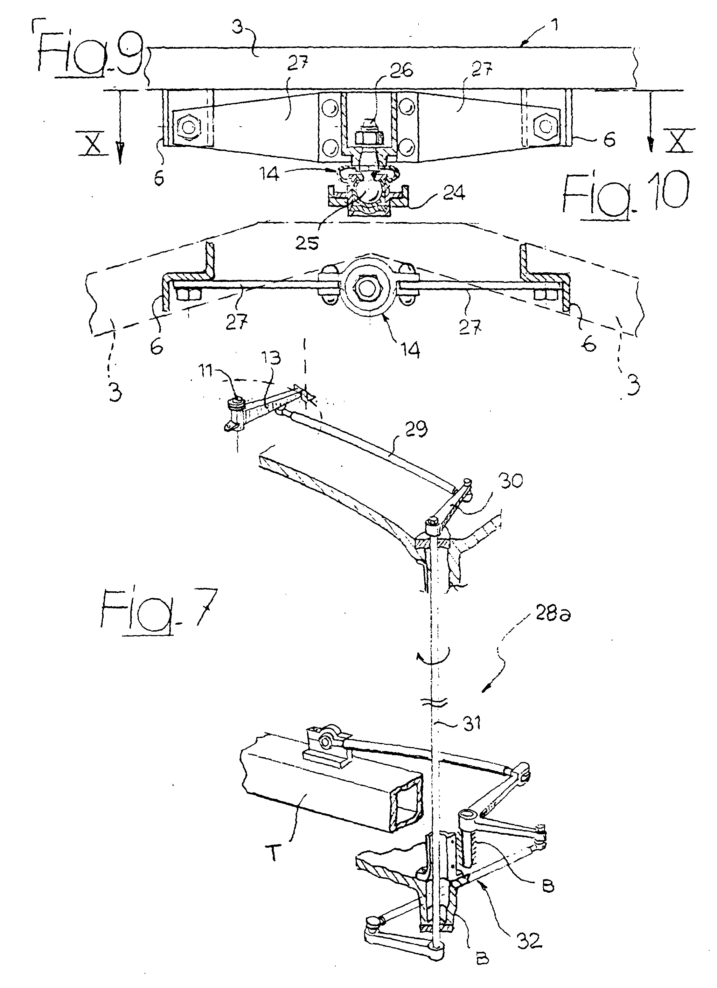

Referring now in better detail to figures 9 and 10, the connection between the first ball joint 14 corresponding to the first swinging arm 13 and the support 1 of pantograph P is carried out so as to enable a limited relative motion in the longitudinal direction between the support 1 and the swinging arm 13. The possibility of this relative motion in the longitudinal direction is enabled by virtue of the fact that the spigot 26 of the ball head 25 of the ball joint 14 is connected to the fixing brackets 6 of the end elements 3 through a double plate element 27 which is resiliently deformable in the longitudinal direction, but is rigid both vertically and transversally. This construction allows, in operation, suppressing of any play and wear during displacement of the support 1 of the pantograph P corresponding to the trim variations of the carbody B along a curve, as well as absorbing any slight differences of the mutual positioning among the three ball joints 14, 21, 22 produced by the oblique displacement of the ball joints 21, 22 as compared to the horizontal displacement of the central ball joint 14.

The operating system for shifting the support 1 of the pantograph P will now be disclosed herebelow.

In general terms, this operating system comprises a transmission arranged between the first swinging arm 13 and the transverse swinging beam T of the bogie C. The invention provides, purely by example, two alternative solutions of this transmission, diagrammatically shown in figures 7 and 8 and designated as 28a, 28b, respectively. In both cases a final transmission connecting rod 29 is provided, which is arranged transversally above the roof R of the carbody B and is pivoted at one end thereof to a substantially central portion of the first swinging arm 13.

In the embodiment of figure 7, the other end of the transverse connecting rod 29 is pivoted to a horizontal lever 30 in turn connected to a rotatable vertical shaft 31 which is placed along one side of the carbody B and is driven in rotation at its lower end, through a linkage system 32, by a substantially central area of the transverse swinging beam T.

In the second embodiment shown in figure 8 the other end of the transverse connecting rod 39 is pivoted to a linkage 33 connected to a push-pull rod 34 which is vertically movable along one side of the carbody B and is driven lowerly by one end of the transverse swinging beam T. In this case the linkage 33 shall be designed such as to make the displacement of the support 1 of the pantograph P independent of the tilting direction of the carbody B on one side or in the opposite side with respect to the end of the transverse swinging beam T operating the push-pull rod 34.

Reverting now to figures 2, 5 and 6, reference numeral 35 designated a damper interposed substantially transversally between the roof R of the carbody B and an attachment appendage 36 of the first swinging arm 30. Moreover, as shown in figure 5, stop members 37 of the angular stroke of the first swinging arm 13 are operatively associated thereto.

Position detector devices, diagrammatically shown as 38 in figure 5, may also be provided, which are connected to the tilting control system of the carbody B, as well as to the control system for raising and lowering of the pantograph P so as to automatically perform pantograph dropping in case of failure, i.e. should the support 1 move without the carbody B being tilted, or in case the support 1 is not brought to its central position when the carbody B returns from a tilted position to its non-tilted condition, for instance owing to any possible breakage of the related transmission system 28a or 28b. Continuous detection of the position of the support 1 of the pantograph P, coupled to the detection of the curve tilting of the carbody B may, as pointed out, be employed to operate in case of emergency automatic dropping of the pantograph P, by means of an electro-mechanical or hydrostatic or the like driving system.

Naturally the details of construction and the embodiments of the invention may be widely varied with respect to what has been described and illustrated, without thereby departing from the scope of the present invention, such as defined in the appended claims.

## Claims

1. A railway vehicle with variable trim car body (B), comprising:
- at least one bogie (C) having a transverse swinging beam (7) and hanger members (L) pivotally connecting said transverse swinging beam (T) of the bogie (C) and the carbody (B) so as to enable tilting of said carbody (B) substantially around a longitudinal axis (A) thereof, tending to oppose the non-compensated centrifugal acceleration acting on the carbody (B) when the vehicle is running along a track curve,
- at least one pantograph (P) provided above the carbody (C) to cooperate under sliding contact with an aerial electrical supply line (E),
- a support (1) of the pantograph (P) movable relatively to the carbody (B) so as to keep said pantograph (P) in contact with said aerial supply line (E) while the carbody (B) is tilted along a curve,
further comprising connecting means of said support (1) of the pantograph (P) onto the roof (R) of the carbody (B) and operating means to displace said support (1) of the pantograph (P) in a transverse direction relative to said longitudinal axis (A) of the carbody (B), through said connecting means, on opposite sides with respect to a central position corresponding to a non-tilted condition of the carbody (B),
**characterized in that** said connecting means between said support (1) of the pantograph (P) and the carbody (B) include:
- a first, a second and a third pivot pin (11, 15, 16) arranged on the roof (R) of the carbody (B) as the apexes of a triangle and of which the first pivot pin (11) is positioned vertically substantially in correspondence of the center line of the carbody (B) and the second and third pivot pins (15, 16) are positioned symmetrically on opposite sides of the center line of the carbody (B) and are inclined with respect to the vertical so as to be mutually converging downwardly,
- a first, a second and a third swinging arm (13, 19, 20) connected at one end thereof (12, 17, 18) to said first, second and third pivot pin (11, 15, 16), respectively,
- a first, a second and a third ball joint (14, 21, 22) connecting the ends (24) of said swinging arms (13, 19, 20) opposite to said pivot pins (11, 15, 16) with said support (1) of the pantograph (P),
and **in that** said operating means comprise a transmission (28a, 28b) between said transverse swinging beam (T) and said first swinging arm (13).

2. Railway vehicle according to claim 1, **characterized in that** in said central position of the support (1) of the pantograph (P) said first, second and third ball joint (14, 21, 22) are substantially arranged in a horizontal plane.

3. Railway vehicle according to claim 2, **characterized in that** said first, second and third swinging arms (13, 19, 20) have the same length.

4. Railway vehicle according to claim 1, **characterized in that** said support (1) of the pantograph (P) and said first ball joint (14) are movable relative to each other in the longitudinal direction.

5. Railway vehicle according to claim 4, **characterized in that** a resilient member (27) elastically yielding in the longitudinal direction and rigid in the vertical and transverse directions is interposed between said first ball joint (14) and said support (1) of the pantograph (P).

6. Railway vehicle according to claim 1, **characterized in that** a damper device (35) is associated to said first swinging arm (13).

7. Railway vehicle according to claim 1, **characterized in that** angular stroke limiting means (37) are operatively associated to said first swinging arm (13).

8. Railway vehicle according to claim 1, **characterized in that** position detecting means (38) are operatively associated to said first swinging arm (13).

9. Railway vehicle according to claim 1, **characterized in that** said transmission (28a) comprises a rotatable vertical shaft (31) arranged along one side of the carbody (B), a lower linkage (32) connected to said transverse swinging beam (7) to operate rotation of said vertical shaft (31), and an upper linkage (29, 30) operatively connecting said vertical shaft (31) to said first swinging arm (13).

10. Railway vehicle according to claim 1,
**characterized in that** said transmission (28b) comprises a vertical push-pull rod (34) vertically movable along one side of the carbody (B) and lowerly operated by one end of said transverse swinging beam (T), and an upper linkage (29, 33) operatively connecting said push-pull rod (34) to said first swinging arm (13).

## Patentansprüche

1. Schienenfahrzeug mit Wagenkasten (B) mit variabler Neigung, aufweisend
- mindestens ein Drehgestell (C) mit einem Pendelquerträger (T) und Aufhängegliedern (L), welche den Pendelquerträger (T) des Drehgestells (C) schwenkbar mit dem Wagenkasten (B) verbinden, so daß sie das Neigen des Wagenkastens im wesentlichen um dessen Längsachse (A) ermöglichen mit der Tendenz, der nicht-kompensierten Zentrifugalbeschleunigung entgegenzuwirken, welche auf den Wagenkasten (B) wirkt, wenn das Fahrzeug eine Schienenkurve durchläuft,
- mindestens einen Scherenstromabnehmer (P), welcher über dem Wagenkasten (B) vorgesehen ist, um im Gleitkontakt mit einer elektrischen Versorgungsoberleitung (E) zusammenzuwirken,
- eine Unterstützung (1) des Scherenstromabnehmers (P), welche relativ zum zum Wagenkasten (B) bewegbar ist, um den Scherenstromabnehmer (P) in Kontakt mit der Versorgungsoberleitung (E) zu halten, während der Wagenkasten (B) in einer Kurve geneigt wird,
weiter aufweisend Verbindungsmittel der Unterstützung (1) des Scherenstromabnehmers (P) auf das Dach (R) des Wagenkastens (B) und Betätigungsmittel zum Verschieben der Unterstützung (1) 'des Scherenstromabnehmers (P) in einer Querrichtung relativ zur Längsachse (A) des Wagenkastens (B), durch die Verbindungsmittel, auf gegenüberliegenden Seiten bezogen auf eine Mittelposition welche einem nichtgeneigten Zustand des Wagenkastens (B) entspricht,
**dadurch gekennzeichnet, daß** die Verbindungsmittel zwischen der Unterstützung (1) des Scherenstromabnehmers (P) und dem Wagenkasten (B) folgendes aufweisen:
- einen ersten, einen zweiten und einen dritten Gelenkzapfen (11, 15, 16), welche auf dem Dach (R) des Wagenkastens (B) als Spitzen eines Dreiecks angeordnet sind, und wovon der erste Gelenkzapfen (11) vertikal im wesentlichen in Übereinstimmung mit der Mittellinie des Wagenkastens (B) angeordnet ist, und der zweite und dritte Gelenkzapfen (15, 16) symmetrisch auf gegenüberliegenden Seiten der Mittellinie des Wagenkastens (B) angeordnet sind und bezogen auf die Vertikale so geneigt sind, daß sie nach unten zu einander zustreben,
- einen ersten, einen zweiten und einen dritten Schwenkarm (13, 19, 20) welche mit einem ihrer Enden (12, 17, 18) mit dem ersten, zweiten beziehungsweise dritten Gelenkzapfen (11, 15, 16) verbunden sind,
- ein erstes, ein zweites und ein drittes Kugelgelenk (14, 21, 22), welche die den Gelenkzapfen (11, 15, 16) gegenüberliegenden Enden (24) der Schwenkarme (13, 19, 20) mit der Unterstützung (1) des Scherenstromabnehmers (P) verbinden,
und daß die Betätigungsmittel eine Kraftübertragung (28a, 28b) zwischen dem Pendelquerträger (T) und dem ersten Schwenkarm (13) aufweisen.

2. Schienenfahrzeug nach Anspruch 1, **dadurch gekennzeichnet, daß** in der Mittelposition der Unterstützung (1) des Scherenstromabnehmers (P) das erste, zweite und dritte Kugelgelenk (14, 21, 22) im wesentlichen in einer horizontalen Ebene angeordnet sind.

3. Schienenfahrzeug nach Anspruch 2, dadurch gekenn zeichnet, daß der erste, zweite und dritte Schwenkarm (13, 19, 20) die gleiche Länge besitzen.

4. Schienenfahrzeug nach Anspruch 1, **dadurch gekennzeichnet, daß** die Unterstützung (1) des Scherenstromabnehmers (P) und das erste Kugelgelenk (14) relativ zueinander in Längsrichtung beweglich sind.

5. Schienenfahrzeug nach Anspruch 4, **dadurch gekennzeichnet, daß** ein federndes Glied (27), welches elastisch in Längsrichtung nachgibt und in vertikaler Richtung und in Querrichtung starr ist, zwischen das erste Kugelgelenk (14) und die Unterstützung (1) des Scherenstromabnehmers (P) zwischengeschaltet ist.

6. Schienenfahrzeug nach Anspruch 1, **dadurch gekennzeichnet, daß** eine Dämpfervorrichtung (35) dem ersten Schwenkarm (13) zugeordnet ist.

7. Schienenfahrzeug nach Anspruch 1, **dadurch gekennzeichnet, daß** den Winkelausschlag begrenzende Mittel (37) funktionell dem ersten Schwenkarm (13) zugeordnet sind.

8. Schienenfahrzeug nach Anspruch 1, **dadurch gekennzeichnet, daß** Positionserkennungsmittel (38) funktionell dem ersten Schwenkarm (13) zugeordnet sind.

9. Schienenfahrzeug nach Anspruch 1, **dadurch gekennzeichnet, daß** die Kraftübertragung (28a)
eine drehbare vertikale Welle (31), die entlang einer Seite des Wagenkastens (B) angeordnet ist,
eine untere Verbindung (32), die mit dem Pendelquerträger (T) verbunden ist, um Drehung der Welle (31) hervorzurufen, und eine obere Verbindung (29, 30), welche die vertikale Welle (31) funktionell mit dem Schwenkarm (13) verbindet, aufweist.

10. Schienenfahrzeug nach Anspruch 1, **dadurch gekennzeichnet, daß** die Übertragung (28b) eine vertikale Zug-Druck-Stange (34), die vertikal entlang einer Seite des Wagenkastens (B) beweglich ist und weiter unten von einem Ende des Pendelquerträgers (T) betätigt wird, und eine obere Verbindung (29, 33), welche die Druck-Zug-Stange (34) mit dem ersten Schwenkarm (13) verbindet, aufweist.

## Revendications

1. Véhicule ferroviaire avec une caisse à inclinaison variable (B), comportant :
- au moins un bogie (C) ayant une traverse oscillante transversale (7) et des éléments de suspension (L) reliant de façon pivotante ladite traverse oscillante transversale du bogie (C) et la caisse (B) de façon à permettre l'inclinaison de ladite caisse (B) sensiblement autour d'un axe longitudinal (A) de celle-ci, qui tend à s'opposer à l'accélération centrifuge non compensée qui agit sur la caisse (B) lorsque le véhicule roule le long d'une courbe de la voie,
- au moins un pantographe (P) prévu au-dessus de la caisse (B) afin de coopérer en contact de glissement avec une ligne d'alimentation électrique aérienne (E),
- un support (1) du pantographe (P) mobile par rapport à la caisse (B) de façon à maintenir ledit pantographe (P) en contact avec ladite ligne d'alimentation aérienne (E) alors que la caisse (B) est inclinée le long d'une courbe,
comportant en outre des moyens de raccordement dudit support (1) du pantographe (P) sur le toit (R) de la caisse (B) et des moyens d'actionnement destinés à déplacer ledit support (1) du pantographe (P) dans une direction transversale par rapport au dit axe longitudinal (A) de la caisse (B), par l'intermédiaire desdits moyens de raccordement, sur des côtés opposés par rapport à une position centrale correspondant à une condition non inclinée de la caisse (B),
**caractérisé en ce que** lesdits moyens de raccordement entre ledit support (1) du pantographe (P) et la caisse (B) comprennent :
- un premier, un deuxième et un troisième axe de pivot (11, 15, 16) disposés sur le toit (R) de la caisse (B) sous la forme des sommets d'un triangle et dont le premier axe de pivot (11) est positionné verticalement sensiblement en correspondance avec l'axe de la caisse (B) et les deuxième et troisième axes de pivot (15, 16) sont positionnés de manière symétrique sur des côtés opposés de l'axe de la caisse (B) et sont inclinés par rapport à la verticale de façon à converger mutuellement vers le bas,
- un premier, un deuxième et un troisième bras oscillant (13, 19, 20) reliés à une extrémité (12, 17, 19) aux dits premier, deuxième et troisième axes de pivot (11, 15, 16) respectivement,
- une première, une deuxième et une troisième rotule (14, 21, 22) reliant les extrémités (24) desdits bras oscillants (13, 19, 20) opposés aux dits axes de pivot (11, 15, 16) avec ledit support (1) du pantographe (P),
et **en ce que** lesdits moyens d'actionnement comportent une transmission (28a, 28b) entre ladite traverse oscillante transversale (T) et ledit premier bras oscillant (13).

2. Véhicule ferroviaire selon la revendication 1, **caractérisé en ce que**, dans ladite position centrale du support (1) du pantographe (P), lesdits première, deuxième et troisième rotules (14, 21, 22) sont disposées sensiblement dans un plan horizontal.

3. Véhicule ferroviaire selon la revendication 2, **caractérisé en ce que** lesdits premier, deuxième et troisième bras oscillants (13, 19, 20) ont la même longueur.

4. Véhicule ferroviaire selon la revendication 1, **caractérisé en ce que** ledit support (1) du pantographe (P) et ladite première rotule (14) sont mobiles l'un par rapport à l'autre dans la direction longitudinale.

5. Véhicule ferroviaire selon la revendication 4, **caractérisé en ce qu'**un élément élastique (27) se déformant élastiquement dans la direction longitudinale et rigide dans les directions verticale et transversale est interposé entre ladite première rotule (14) et ledit support (1) du pantographe (P).

6. Véhicule ferroviaire selon la revendication 1, **caractérisé en ce qu'**un dispositif d'amortissement (35) est associé au dit premier bras oscillant (13).

7. Véhicule ferroviaire selon la revendication 1, **caractérisé en ce que** des moyens de limitation de course angulaire (37) sont associés de manière opérationnelle au dit premier bras oscillant (13).

8. Véhicule ferroviaire selon la revendication 5, **caractérisé en ce que** des moyens de détection de position (38) sont associés de manière opérationnelle au dit premier bras oscillant (13).

9. Véhicule ferroviaire selon la revendication 1, **caractérisé en ce que** ladite transmission (28a) comprend un arbre vertical rotatif (31) disposé le long d'un côté de la caisse (B), une biellette inférieure (32) reliée à ladite traverse oscillante transversale (7) afin de provoquer la rotation dudit arbre vertical (31), et une biellette supérieure (29, 30) reliant de manière opérationnelle ledit arbre vertical (31) au dit premier bras oscillant (13).

10. Véhicule ferroviaire selon la revendication 1, **caractérisé en ce que** ladite transmission (28b) comporte une tige de poussée et de traction verticale (34) verticalement mobile le long d'un côté de la caisse (B) et actionnée en bas par une extrémité de ladite traverse oscillante transversale (7), et une biellette supérieure (29, 33) qui relie de manière opérationnelle ladite tige de poussée et de traction (34) au dit premier bras oscillant (13).
